# EUROPEAN PATENT APPLICATION

(11) **EP 3 197 103 A1**
(43) Date of publication of application: **26.07.2017**
(21) Application number: 15852201.1
(22) Date of filing: 20.04.2015
(51) Int. Cl.: H04L 12/46

(54) **SVLAN ALLOCATION METHOD AND DEVICE, AND ETHERNET SERVICE ESTABLISHMENT METHOD AND SYSTEM**

(30) Priority: 21.10.2014 CN 201410562167
(71) Applicant: ZTE Corporation, Shenzhen, Guangdong 518057 (CN)
(72) Inventor: LUO, Chun, Shenzhen Guangdong 518057 (CN)
(74) Representative: Savi, Massimiliano
(86) International application number: PCT/CN2015/077002
(87) International publication number: WO 2016/062045

(57) **Abstract**

Disclosed are a method and apparatus for allocating SVLANs and a method and system for establishing an Ethernet service. The SVLANs allocation method of the present invention is applied for establishment of the Ethernet service and includes: pre-storing nodes in a transmission network bearing Ethernet service and SVLANs which have been used on the nodes; after receiving a SVLAN allocation request, automatically acquiring SVLANs which have been used on the nodes required for establishing the Ethernet service by the transmission network according to the stored nodes and SVLANs; and allocating a SVLAN which is not used by all of the nodes required for establishing the Ethernet service to the Ethernet service according to the acquisition result. The SVLANs allocation method of present invention can solve the problems of low efficiency of the current method for allocating the SVLANs manually and the requirement for automatic service establishment cannot be met.

## Description

### Technical Field

The present invention relates to the field of service virtual local area network (Service VLAN (SVLAN)) allocation technologies, and in particularly, to a method and apparatus for allocating SVLANs and a method and system for establishing an Ethernet service.

### Background

Ethernet services, proposed by the metro Ethernet forum (MEF), are defined by a topology of an Ethernet network and a set of attributes associated with a Ethernet virtual connection (EVC), user network interface (UNI) and network network interface (NNI), and are born by a connection-oriented service layer network, which may be a transmission network, such as a synchronous digital hierarchy (SDH), an optical transport network (PTN), a multiprotocol label switching-transport profile (MPLS-TP), etc. The EVC refers to an Ethernet MAC layer network (ETH) connection or ETH connectivity between the user network interface-network (UNI-N). The MEF defines several types of EVC service models, which are point-to-point EVC, point-to-multipoint EVC and multipoint-to-multipoint EVC, respectively, to connect two or more user network interfaces (UNIs). At present, a mainstream technology of implementing the EVC models is the QinQ (also referred to as stacked VLAN or double VLAN, technical standards of which come from IEEE802.1ad) manner, that is, in transmission of a customer VLAN (CVLAN) coming from the UNI in the EVC, a layer of SVLAN is superimposed onto the CVLAN. The VLAN is typically represented by a VLAN identifier (ID), which is a 12-digit number and the value range of which is from 1 to 4094.

The SVLANs are required to keep consistent on all UNI terminal nodes of the same Ethernet service in a traditional manner, in which a static configuration is made on a network manager, the technical personnel first query used SVLANs on UNI-N nodes required to be used and find an idle SVLAN, which has not been used by all of the UNI-N nodes of the current Ethernet service, and configure it onto a physical device, such that the Ethernet service is in normal communication. This manner actually is to ensure the consistency of the SVLANs on all of the UNI-N nodes of each of the Ethernet services manually. If there are a lot of Ethernet services born in a transmission network, it will be very difficult to find an available SVLAN manually and the efficiency will be very low. Thus, there is pressing need to improve the level of automation to find an available SVLAN conveniently.

In addition, with the development of intellectualization of transmission networks, the related specifications and standards of the Ethernet services born in the transmission networks, especially automatically switched optical networks, has occurred and establishment of the Ethernet services in the transmission networks can be triggered automatically in a signaling manner. However, as to how to allocate the SVLANs, the existing method has not been defined yet at present. If manual configuration is adopted, then the requirement for automatic service establishment cannot be met.

### Summary

A technique problem to be solved by the present invention is to provide a method and apparatus for allocating SVLANs and a method and system for establishing an Ethernet service so as to solve the problems of low efficiency of the current method for allocating the SVLANs manually and the requirement for automatic service establishment cannot be met.

In order to solve the technique problem described above, the following technical scheme is adopted.

A method for allocating service virtual local area networks, SVLANs, applied in establishment of an Ethernet service includes:
pre-storing nodes in a transmission network bearing the Ethernet service and SVLANs which have been used on the nodes;
after receiving a SVLAN allocation request, automatically acquiring SVLANs which have been used on nodes required for establishing the Ethernet service by the transmission network according to the stored nodes and SVLANs,; and
allocating a SVLAN which is not used by all of the nodes required for establishing the Ethernet service, to the Ethernet service.

In an exemplary embodiment, automatically acquiring SVLANs which have been used on the nodes required for establishing the Ethernet service by the transmission network includes:
determining the nodes required for establishing the Ethernet service by the transmission network according to the SVLAN allocation request; and
automatically acquiring, from the stored nodes and SVLANs, the SVLANs which have been used on the nodes required for establishing the Ethernet service by the transmission network.

In an exemplary embodiment, the method further includes:
when the Ethernet service is established or the Ethernet service is deleted, updating the SVLANs or a set of SVLANs which have been used on the corresponding nodes of the Ethernet service.

In an exemplary embodiment, before the step of receiving the SVLAN allocation request, the method further includes:
a user selecting the nodes required for establishing the Ethernet service by the transmission network to generate the SVLAN allocation request according to the selected nodes; or
the transmission network determining the nodes required for establishing the Ethernet service by the transmission network to generate the SVLAN allocation request according to the determined nodes.

A method for establishing an Ethernet service includes:
after a transmission network bearing the Ethernet service receives an Ethernet service request, the transmission network determining nodes required for establishing the Ethernet service by the transmission network;
the transmission network sending a service virtual local area network, SVLAN, allocation request according to the determined nodes;
allocating SVLANs to the Ethernet service using the SVLAN allocation method described above and sending the allocated SVLANs to the transmission network; and
the nodes determined by the transmission network establishing the Ethernet service and configuring the allocated SVLANs to a physical device bearing the Ethernet service.

An apparatus for allocating service virtual local area networks SVLANs, applied in establishment of an Ethernet service includes a storing module, an acquiring module and an allocating module, herein
the storing module is configured to pre-store nodes in a transmission network bearing the Ethernet service and SVLANs which have been used on the nodes;
the acquiring module is configured to, after receiving a SVLAN allocation request, automatically acquire SVLANs which have been used on nodes required for establishing the Ethernet service by the transmission network according to the stored nodes and SVLANs,; and
the allocating module is configured to allocate a SVLAN which is not used by all of the nodes required for establishing the Ethernet service, to the Ethernet service.

In an exemplary embodiment, the acquiring module is configured to automatically acquire SVLANs which have been used on the nodes required for establishing the Ethernet service by the transmission network according to the stored nodes and SVLANs in following way:
determining the nodes required for establishing the Ethernet service by the transmission network according to the SVLAN allocation request; and
automatically acquiring, from the stored nodes and SVLANs, the SVLANs which have been used on the nodes required for establishing the Ethernet service by the transmission network.

In an exemplary embodiment, the apparatus further includes an updating module, herein
the updating module is configured to, when the Ethernet service is established or the Ethernet service is deleted, update the SVLANs or a set of SVLANs which have been used on the corresponding nodes of the Ethernet service.

In an exemplary embodiment, the apparatus further includes a verifying module, herein
the verifying module is configured to verify the allocated SVLANs according to the nodes and SVLANs stored by the storing module.

A system for establishing an Ethernet service includes a transmission network unit bearing the Ethernet service and the SVLAN allocation apparatus described above, herein the transmission network unit includes a plurality of nodes;
the transmission network unit is configured to, after receiving an Ethernet service request, determine nodes required for establishing the Ethernet service by the transmission network, and send a SVLAN allocation request to the SVLAN allocation apparatus according to the determined node;
the SVLAN allocation apparatus is configure to allocate SVLANs to the Ethernet service required to be established and send the allocated SVLANs to the transmission network unit; and
the nodes determined by the transmission network unit are configured to establish the Ethernet service and configure the allocated SVLANs to a physical device bearing the Ethernet service.

A computer program includes program instructions, which, when executed by a computer, cause the computer to perform the SVLAN allocation method described above.

A carrier is loaded with the computer program described above.

A computer program includes program instructions, which, when executed by a computer, cause the computer to perform the method for establishing an Ethernet service described above.

A carrier is loaded with the computer program described above.

A technical effect of the technical scheme of the present invention is described below.

The technical scheme of the present invention provides a method and apparatus for allocating SVLANs and a method and system for establishing an Ethernet service such that the SVLANs can be allocated automatically and the Ethernet service can be established automatically in a transmission network to ensure normal transmission. Specifically, the method for allocating the SVLANs in accordance with the present invention should be applied for establishment of the Ethernet service and includes: pre-storing nodes in a transmission network bearing the Ethernet service and SVLANs which have been used on the nodes; after receiving a SVLAN allocation request, automatically acquiring, according to the stored nodes and SVLANs, SVLANs which have been used on the nodes required for establishing the Ethernet service by the transmission network; and allocating, according to the acquisition result, a SVLAN, which is not used by all of the nodes required for establishing the Ethernet service, to the Ethernet service. The method in accordance with the present invention can automatically acquire, from the pre-stored SVLANs, the SVLANs which have been used on the nodes required for establishing the Ethernet service, and can automatically allocate the SVLAN, which is not used by all of the nodes required for establishing the current Ethernet service, on the basis of the automatic acquisition. Compared with the existing technology, the allocation method of the technical scheme of the present invention can improve the efficiency of the allocation of the SVLANs and can be adapted to the current mechanism for establishing services automatically to meet the requirement for establishing the services automatically.

In another aspect, the method in accordance with the present invention, on the basis of automatically acquiring the SVLANs which have been used on the nodes and if a manual allocation method is used, can improve the efficiency of the manual allocation method, and likewise can be adapted to the current mechanism for establishing services automatically to meet the requirement for establishing the services automatically.

### Brief Description of the Drawings

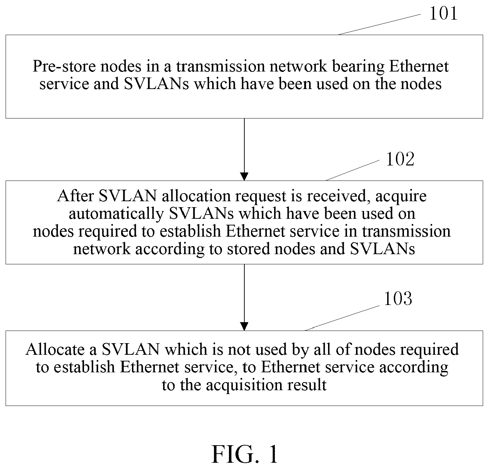

FIG. 1 is a flow chart of a method for allocating SVLANs in accordance with an embodiment one of the present invention.
FIG. 2 is a flow chart of a method for establishing an Ethernet service in accordance with an embodiment two of the present invention.
FIG. 3 is a block diagram of a first apparatus for allocating SVLANs in accordance with an embodiment three of the present invention.
FIG. 4 is a block diagram of a second apparatus for allocating SVLANs in accordance with the embodiment three of the present invention.
FIG. 5 is a block diagram of a third apparatus for allocating SVLANs in accordance with the embodiment three of the present invention.
FIG. 6 is a block diagram of a system for establishing an Ethernet service in accordance with an embodiment four of the present invention.
FIG. 7 is a flow chart of a process for establishing an Ethernet service point-to-point EVC automatically in accordance with an embodiment five of the present invention.
FIG. 8 is a flow chart of a process for establishing an Ethernet service point-to-point EVC automatically in accordance with the embodiment five of the present invention.

### Detailed Description

The present invention will be described in further detail below in conjunction with the specific embodiments.

### Embodiment one:

Considering the problems of low efficiency of the current method for allocating SVLANs manually and the requirement for automatic service establishment cannot be met, an embodiment provides a method for allocating SVLANs, applied in establishment of an Ethernet service includes the steps 101-103.

In step 101: nodes in a transmission network bearing the Ethernet service and SVLANs which have been used on the nodes are pre-stored.

The method in accordance with the embodiment may store the used SVLANs according to the nodes. Specifically, each of the nodes in the transmission network bearing the Ethernet service and the SVLANs which have been used on each of the nodes can be stored in advance. An executive entity of that step may be a SVLAN allocation device.

The nodes in the embodiment may be UNI-N nodes, nodes involved in the following are the same too and will be not be described repeatedly.

In step 102: after a SVLAN allocation request is received, according to the stored nodes and SVLANs, SVLANs which have been used on nodes required for establishing the Ethernet service by the transmission network is acquired automatically.

In the establishment of the Ethernet service, the Ethernet service is typically established by the transmission network bearing the Ethernet service, and specifically, by some nodes in the transmission network.

In an exemplary embodiment, the step may include following steps.

The nodes required for establishing the Ethernet service by the transmission network are determined according to the SVLAN allocation request.

The SVLANs which have been used on the nodes required for establishing the Ethernet service by the transmission network are automatically acquired from the stored nodes and SVLANs. All of the SVLANs are allocated in a unified way by a SVLAN allocation device/apparatus and then are sent to the nodes. After each allocation, the allocated SVLANs are all put into the corresponding nodes, thus, the SVLAN allocation apparatus knows SVLAN usage conditions of all the nodes.

That step can determine the nodes first, and then find the SVLANs, which have been used on the determined node, from the stored SVLANs. In the process of establishing the Ethernet service, the determined nodes are the nodes determined to be required for establishing the Ethernet service by the transmission network bearing the Ethernet service.

An executive entity of the step is the SVLAN allocation device, which is utilized to implement automatic acquisition.

In step 103: the SVLANs, which have been used on the nodes required for establishing the Ethernet service, is established according to the acquired transmission network, and a SVLAN, which is not used by all of the nodes required for establishing the Ethernet service, is allocated to the Ethernet service.

On the basis of acquiring the SVLANs which have been used on the required nodes, the method in accordance with the embodiment may take the union of sets of the SVLANs which have been used on each of the required nodes. The union is a set of SVLANs which are not useable for the current service. After the union is obtained, a SVLAN which is not in the union may be allocated based on the union.

An executive entity of step 103 may be the SVLAN allocation device or staff. In the case that the entity is the SVLAN allocation device, the method in accordance with the embodiment may implement automatic allocation of the SVLANs. And in the case that the entity is the staff, the method in accordance with the embodiment may implement semi-automatic allocation of the SVLANs.

The method in accordance with the embodiment can automatically acquire, from the pre-stored SVLANs, the SVLANs which have been used on the nodes required for establishing the Ethernet service by the transmission network, and can automatically allocate the SVLAN, which is not used by all of the nodes required for establishing the current Ethernet service, on the basis of the automatic acquisition. Compared with the existing technology, both automatic allocation and semi-automatic allocation can improve the efficiency of the allocation of the SVLANs and can be adapted to the current mechanism for establishing services automatically to meet the requirement for establishing the services automatically.

In order to improve the accuracy of allocating the SVLANs, it is necessary to update the stored data timely. Thus, the method in accordance with the embodiment further includes flowing steps.

When the Ethernet service is established or the Ethernet service is deleted, the SVLANs or a set of SVLANs which have been used on the corresponding nodes are updated.

For example, when the nodes in the transmission network bearing the service establish the Ethernet service, SVLANs used by the nodes in the transmission network bearing the service are added to the set of the SVLANs which have been used on the corresponding nodes. When the nodes delete the Ethernet service, the currently used SVLANs are removed from the set of the SVLANs which have been used on the nodes.

Using the method in accordance with the embodiment can ensure the stored and used SVLANs are up-to-date so as to improve the accuracy of the allocation of the SVLANs and ensure normal transmission of the established Ethernet service.

Based on the method described above, the received SVLAN allocation request in the method in accordance with the embodiment may be generated by one of two following manners.

The first manner is to generate the SVLAN allocation request according to the nodes required for establishing the Ethernet service by the transmission network, selected by a user. For example, the technical personnel select UNI-N nodes in the transmission network bearing the service and send the allocation request according to the selection.

The second manner is to generate the SVLAN allocation request according to the determined nodes required for establishing the Ethernet service by the transmission network.

For example, after the transmission network bearing the Ethernet service receives the service request, it is determined that the UNI-N nodes of the current Ethernet service are established in the transmission network, and the SVLAN allocation request is sent according to the determination result.

In the method in accordance with the embodiment, the SVLAN allocation request may carry identification information of the nodes required by the current Ethernet service.

In addition, in order to improve the correctness of manual allocation of the SVLANs, the method in accordance with the embodiment may further include: verifying the SVLANs allocated by the staff according to the stored nodes and SVLANs.

For the manual allocation of the SVLANs, the method in accordance with the embodiment may allow the staff to verify the SVLANs which they analyze manually are correct, thereby avoiding a conflict between the SVLANs efficiently and improving the correctness of the manual allocation of the SVLANs.

### Embodiment two:

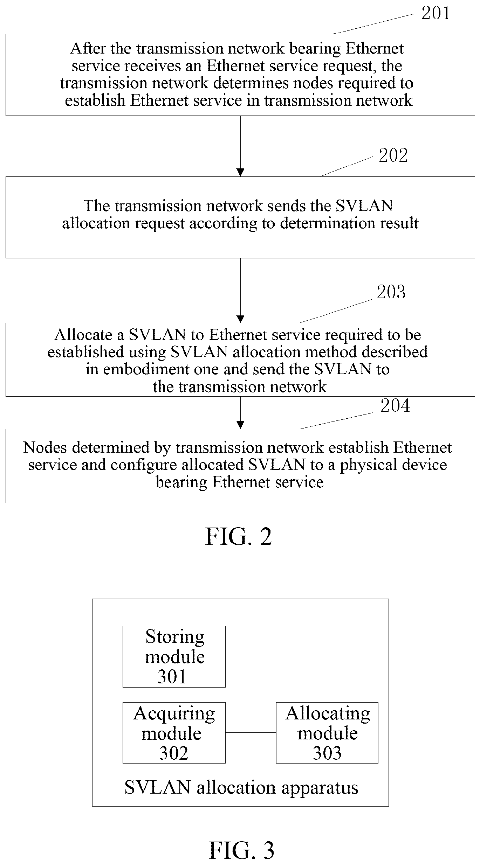

Based on the allocation method presented in the embodiment, the present embodiment provides a method for establishing an Ethernet service, which, as shown in FIG.2, includes the steps 201-204.

In step 201: after a transmission network bearing the Ethernet service receives an Ethernet service request, the transmission network determines nodes required for establishing the Ethernet service by the transmission network.

In the step the nodes are determined by routing computation.

In step 202: the transmission network sends a SVLAN allocation request according to the determination result.

For example, a SVLAN allocation request carrying the identification information of the determined nodes is generated.

In step 203: a SVLAN is allocated to the Ethernet service required to be established using the SVLAN allocation method described in the embodiment one and is sent to the transmission network.

In step 204: the nodes determined by the transmission network establish the Ethernet service and configure the allocated SVLAN to a physical device bearing the Ethernet service.

The method for establishing the Ethernet service in accordance with the embodiment may include specifically: when the Ethernet service is established automatically, after receiving the Ethernet service request, the transmission network bearing the Ethernet service performs routing computation to determine UNI-N nodes establishing the Ethernet service in the transmission network, then sending the SVLAN allocation request to a SVLAN allocation apparatus, which allocates a SVLAN which is not used on all of the UNI-N nodes, and configures the SVLAN to a physical device when the Ethernet service is established on each of the UNI-N nodes.

It can be known from the above that the method for establishing the Ethernet service in accordance with the embodiment uses the allocation method described in the embodiment one to allocate the SVLANs, such that the efficiency of the establishment of the Ethernet service may be improved and the normal transmission of the service may be ensured, thereby improving automation level of the establishment of the Ethernet service.

### Embodiment three:

As shown in FIG.3, the embodiment provides an apparatus for allocating SVLANs applied in establishment of an Ethernet service including a storing module 301, an acquiring module 302 and an allocating module 303.

The storing module 301 is configured to pre-store nodes in a transmission network bearing the Ethernet service and SVLANs which have been used on the nodes.

The acquiring module 302 is configured to, after receiving a SVLAN allocation request, automatically acquire SVLANs which have been used on nodes required for establishing the Ethernet service by the transmission network according to the stored nodes and SVLANs,.

The allocating module 302 is configured to allocate, according to the acquired SVLANs which have been used on the nodes required for establishing the Ethernet service by the transmission network, a SVLAN which is not used by all of the nodes required for establishing the Ethernet service, to the Ethernet service.

The allocation apparatus in accordance with the embodiment may allocate the SVLANs automatically, thereby implementing automation of the allocation of the SVLANs and improving the efficiency of the allocation of the SVLANs. Additionally, using the allocation apparatus in accordance with the embodiment may also improve the efficiency of the establishment of the Ethernet service and ensure the normal transmission of the Ethernet service.

In an exemplary embodiment, the acquiring module 302 described in the embodiment is configured to:
determine the nodes required for establishing the Ethernet service by the transmission network according to the SVLAN allocation request; and
automatically acquire, from the stored nodes and SVLANs, the SVLANs which have been used on the nodes required for establishing the Ethernet service by the transmission network.

Specifically, the SVLAN allocation request described in the embodiment includes:
a SVLAN allocation request generated according to the nodes required for establishing the Ethernet service by the transmission network, selected by a user; and
a SVLAN allocation request generated according to the determined nodes required for establishing the Ethernet service by the transmission network.

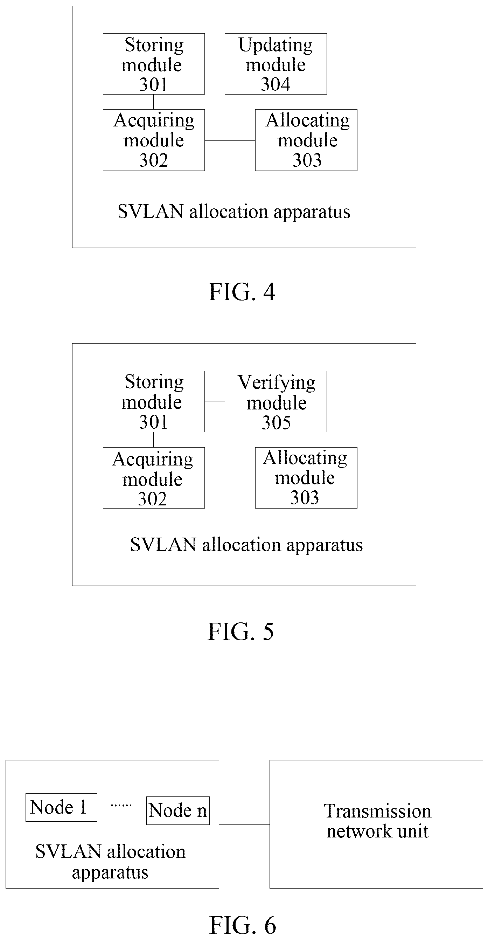

In order to improve the accuracy of the allocation of the SVLANs, it is necessary to update the stored data timely. Thus, as shown in FIG.4, the apparatus in accordance with the embodiment may further include an updating module 304.

The updating module 304 is configured to, when the Ethernet service is established or the Ethernet service is deleted, update the SVLANs or a set of SVLANs which have been used on the corresponding nodes of the Ethernet service.

As shown in FIG.5, the apparatus described above may further include a verifying module 305.

The verifying module 305 is configured to verify the SVLANs allocated by the staff according to the nodes and SVLANs stored by the storing module.

### Embodiment four:

As shown in FIG.6, an embodiment provides a system for establishing an Ethernet service including a transmission network unit bearing the Ethernet service and the SVLAN allocation apparatus described in the embodiment one, herein the transmission network unit includes a plurality of nodes.

The transmission network unit is configured to, after receiving an Ethernet service request, determine nodes required for establishing the Ethernet service by the transmission network, and send a SVLAN allocation request to the SVLAN allocation apparatus according to the determination result.

The transmission network unit is configured to, after receiving the Ethernet service request, determine the nodes required for it to establish the Ethernet service, and send a SVLAN allocation request to the SVLAN allocation apparatus according to the determination result.

The SVLAN allocation apparatus is configure to allocate a SVLAN to the Ethernet service required to be established and send the allocated SVLAN to the transmission network unit.

The nodes determined by the transmission network unit are configured to establish the Ethernet service and configure the allocated SVLAN to a physical device bearing the Ethernet service.

The system for establishing the Ethernet service provided by the embodiment may improve the efficiency of the establishment of the Ethernet service and ensure the normal transmission of the service, thereby improving automation level of the establishment of the Ethernet service.

### Embodiment five:

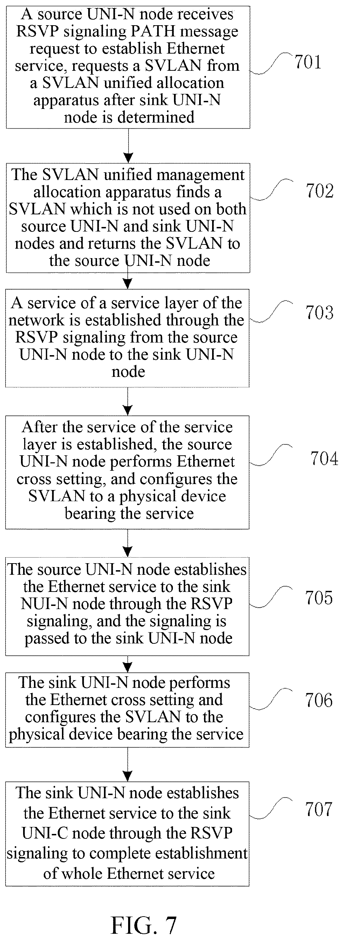

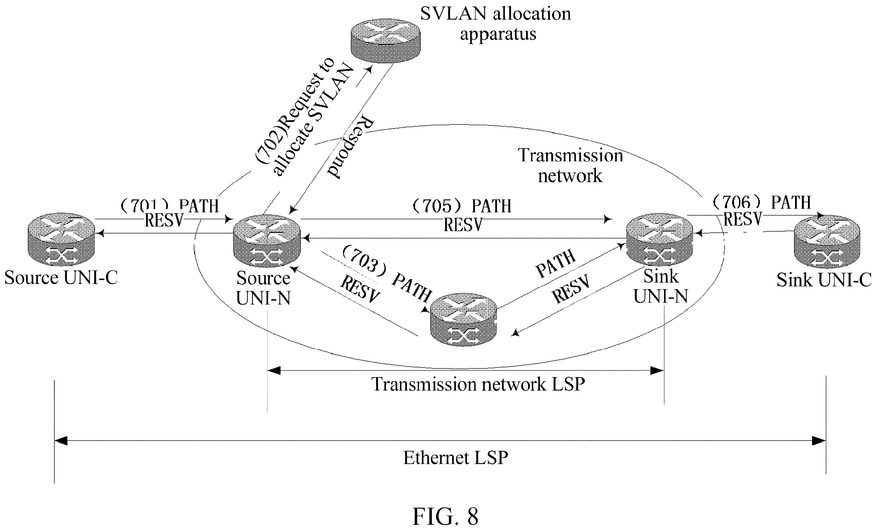

An embodiment presents one type of the allocation apparatus described in the embodiment two. Specifically, the allocation apparatus is applied in a process of establishing an Ethernet service point-to-point EVC automatically, which, as shown in FIG.7 and 8, includes the following steps 701-707.

In step 701: a source UNI-N node receives an RSVP signaling PATH message for requesting to establish an Ethernet service, performs routing computation, and requests a SVLAN from a SVLAN allocation apparatus after a sink UNI-N node is determined.

In step 702: the SVLAN allocation apparatus finds a SVLAN which is not used on both the source and sink UNI-N nodes according to the method described above and returns the SVLAN to the source UNI-N node.

In step 703: a service of a service layer of a network is established through the RSVP signaling from the source UNI-N node to the sink UNI-N node.

In step 704: after the service of the service layer is established, the source UNI-N node performs Ethernet cross setting, and configures the SVLAN to a physical device bearing the service. Since the step 704 takes place on the source UNI-N node, it is not easy to be marked in FIG.8, so the step 704 is not marked in the FIG.8.

In step 705: the source UNI-N node establishes the Ethernet service to the sink NUI-N node through the RSVP signaling, the allocated SVLAN may be carried to the sink UNI-N node through the signaling or may be query the SVLAN allocated to the service from the SVLAN allocation apparatus at the sink UNI-N node through an Ethernet service call identifier.

In step 706: the sink UNI-N node performs the Ethernet cross setting and configures the SVLAN to the physical device bearing the service.

In step 707: the sink UNI-N node establishes the Ethernet service to the sink NUI-C node through the RSVP signaling to complete the establishment of the whole Ethernet service.

An embodiment of the present invention further discloses a computer program including program instructions, which, when executed by a computer, cause the computer to perform the SVLAN allocation method described above.

An embodiment of the present invention further discloses a carrier loaded with the computer program described above.

An embodiment of the present invention further discloses a computer program includes program instructions, which, when executed by a computer, cause the computer to perform the method for establishing an Ethernet service described above.

An embodiment of the present invention further discloses a carrier loaded with the computer program described above.

The content described above is a description made in further detail to the present invention in conjunction with the specific embodiments, and it is should not be assumed that the specific embodiments of the present invention are limited thereto. Some simple inferences or substitutions, which may be made by those ordinarily skilled in the art, to which the present invention belongs, on the premise of without departing from the idea of the present invention, should be regarded as belonging to the protection scope of the present invention.

### Industrial Applicability

The method for allocating SVLANs in accordance with the present invention can solve the problems of low efficiency of the current method for allocating the SVLANs manually and the requirement for automatic service establishment cannot be met. Therefore, the present invention has very strong industrial applicability.

## Claims

1. A method for allocating service virtual local area networks, SVLANs, applied in establishment of an Ethernet service, comprising:
pre-storing nodes in a transmission network bearing the Ethernet service and SVLANs which have been used on the nodes;
after receiving a SVLAN allocation request, automatically acquiring SVLANs which have been used on nodes required for establishing the Ethernet service by the transmission network according to the stored nodes and SVLANs; and
allocating a SVLAN which is not used by all of the nodes required for establishing the Ethernet service, to the Ethernet service.

2. The method according to claim 1, wherein automatically acquiring SVLANs which have been used on the nodes required for establishing the Ethernet service by the transmission network according to the stored nodes and SVLANs, comprises:
determining the nodes required for establishing the Ethernet service by the transmission network according to the SVLAN allocation request; and
automatically acquiring, from the stored nodes and SVLANs, the SVLANs which have been used on the nodes required for establishing the Ethernet service by the transmission network.

3. The method according to claim 1 or 2, further comprising:
when the Ethernet service is established or the Ethernet service is deleted, updating the SVLANs or a set of SVLANs which have been used on the corresponding nodes of the Ethernet service.

4. The method according to claim 1 or 2, wherein before the step of receiving the SVLAN allocation request, the method further comprises:
a user selecting the nodes required for establishing the Ethernet service by the transmission network to generate the SVLAN allocation request according to the selected nodes; or
the transmission network determining the nodes required for establishing the Ethernet service by the transmission network to generate the SVLAN allocation request according to the determined nodes.

5. A method for establishing an Ethernet service comprising:
after a transmission network bearing the Ethernet service receives an Ethernet service request, the transmission network determining nodes required for establishing the Ethernet service by the transmission network;
the transmission network sending a service virtual local area network, SVLAN, allocation request according to the determined nodes;
allocating SVLANs to the Ethernet service using the SVLAN allocation method according to any one of claims 1-4 and sending the allocated SVLANs to the transmission network; and
the nodes determined by the transmission network establishing the Ethernet service and configuring the allocated SVLANs to a physical device bearing the Ethernet service.

6. An apparatus for allocating service virtual local area networks, SVLANs, applied in establishment of an Ethernet service comprising a storing module, an acquiring module and an allocating module, wherein
the storing module is configured to pre-store nodes in a transmission network bearing the Ethernet service and SVLANs which have been used on the nodes;
the acquiring module is configured to, after receiving a SVLAN allocation request, automatically acquire SVLANs which have been used on nodes required for establishing the Ethernet service by the transmission network according to the stored nodes and SVLANs; and
the allocating module is configured to allocate a SVLAN which is not used by all of the nodes required for establishing the Ethernet service, to the Ethernet service.

7. The apparatus according to claim 6, wherein the acquiring module is configured to automatically acquire, SVLANs which have been used on the nodes required for establishing the Ethernet service by the transmission network according to the stored nodes and SVLANs in following way:
determining the nodes required for establishing the Ethernet service by the transmission network according to the SVLAN allocation request; and
automatically acquiring, from the stored nodes and SVLANs, the SVLANs which have been used on the nodes required for establishing the Ethernet service by the transmission network.

8. The apparatus according to claim 6 or 7, further comprising an updating module, wherein
the updating module is configured to, when the Ethernet service is established or the Ethernet service is deleted, update the SVLANs or a set of SVLANs which have been used on the corresponding nodes of the Ethernet service.

9. The apparatus according to claim 6 or 7, further comprising a verifying module, wherein
the verifying module is configured to verify the allocated SVLANs according to the nodes and SVLANs stored by the storing module.

10. A system for establishing an Ethernet service comprising a transmission network unit bearing the Ethernet service and the SVLAN allocation apparatus according to any one of claims 6-9, wherein the transmission network unit comprises a plurality of nodes;
the transmission network unit is configured to, after receiving an Ethernet service request, determine nodes required for establishing the Ethernet service by the transmission network, and send a SVLAN allocation request to the SVLAN allocation apparatus according to the determined node;
the SVLAN allocation apparatus is configure to allocate SVLANs to the Ethernet service required to be established and send the allocated SVLANs to the transmission network unit; and
the nodes determined by the transmission network unit are configured to establish the Ethernet service and configure the allocated SVLANs to a physical device bearing the Ethernet service.

11. A computer program comprising program instructions, which, when executed by a computer, cause the computer to perform the SVLAN allocation method according to any one of claims 1-4.

12. A carrier loaded with the computer program according to claim 11.

13. A computer program comprising program instructions, which, when executed by a computer, cause the computer to perform the method for establishing an Ethernet service according to claim 5.

14. A carrier loaded with the computer program according to claim 13.
